# EUROPEAN PATENT APPLICATION

(11) **EP 1 338 987 A1**
(43) Date of publication of application: **27.08.2003**
(21) Application number: 03250998.6
(22) Date of filing: 19.02.2003
(51) Int. Cl.: G06F 17/30

(54) **Providing information in a computer network**

(30) Priority: 14.03.2002 US 98037; 19.02.2002 US 357887 P
(71) Applicant: Hewlett-Packard Company, Palo Alto, CA 94304 (US)
(72) Inventor: Fields, Wendell, Burlingame, CA 94010 (US); Black, Karl S., Nampa, ID 83687 (US); Kumar, Ajay, Mountain View, CA 94041 (US); Jackson, Kevin H., Traverse City, MI 49686 (US)
(74) Representative: Powell, Stephen David

(57) **Abstract**

A provisioning repository (202) receives content from multiple content sources (201), the content in the provisioning repository (202) being used to populate page regions of a template (210). Documents based on the template (210) may be created and then published in a computer network. A workflow system (801) is employed to manage the creation, editing, and publication of documents.

## Description

The present invention relates generally to data processing, and more particularly to systems and methods for providing information in a computer network.

Computer networks such as the Internet enable fast and relatively widespread dissemination of information. On the Internet, for example, web sites containing one or more web pages may be accessed by end-users having a computer, a web browser, and a device for coupling the computer to the Internet. A web page may contain information on various topics including science, products, news, education, etc.

Because the Internet is readily accessible, more and more organizations operate web sites as a way of providing information to the general public. For example, an organization may have one or more web sites containing information about the organization and the products (i.e., goods and services) it provides, if any. The organization may also have divisions and remote offices, each with its own web site containing particular information. For such an organization, the creation, editing, and publication of web pages are a sizeable investment in time and expense. This is specially true if the contents of the web pages come from multiple sources and the organization intends to maintain a consistent look and feel across all of its web sites.

The present invention relates to systems and methods for providing information in a computer network. Embodiments of the present invention may be used in various applications including, without limitation, in the publication of web pages on the Internet or an intranet.

In one embodiment, a provisioning repository receives content from multiple content sources. Content in the provisioning repository may be used to populate page regions of a template. Documents based on the template may be created and then published in a computer network. In another embodiment, a workflow system is employed to manage the creation, editing, and publication of documents (e.g., web pages).

These and other features and advantages of the present invention will be readily apparent to persons of ordinary skill in the art upon reading the entirety of this disclosure, which includes the accompanying drawings and claims.

FIG. 1 shows a functional diagram of a computer network where embodiments of the present invention may be employed.

FIG. 2 shows a functional diagram illustrating a system for creating and publishing web pages in accordance with an embodiment of the present invention.

FIG. 3A shows an example template in accordance with an embodiment of the present invention.

FIG. 3B shows an example web page created based on the template of FIG. 3A.

FIG. 4 shows a functional diagram of a system for creating web pages in accordance with an embodiment of the present invention.

FIG. 5 shows an example object model of elements of a web page in accordance with an embodiment of the present invention.

FIG. 6 shows an example object model for processing elements of a web page in accordance with an embodiment of the present invention.

FIG. 7 shows an example data model of a provisioning repository in accordance with an embodiment of the present invention.

FIG. 8 shows a functional diagram of a workflow system in accordance with an embodiment of the present invention.

FIG. 9 shows a functional diagram of another workflow system in accordance with an embodiment of the present invention.

The use of the same reference label in different drawings indicates the same or like components.

In the present disclosure, numerous specific details are provided, such as examples of systems, components, and methods to provide a thorough understanding of embodiments of the invention. Persons of ordinary skill in the art will recognize, however, that the invention can be practiced without one or more of the specific details. In other instances, well-known details are not shown or described to avoid obscuring aspects of the invention.

Embodiments of the present invention will be described in the context of web page publishing on the Internet. It should be understood, however, that the present invention is not so limited and may be used in other applications where information is provided in a computer network.

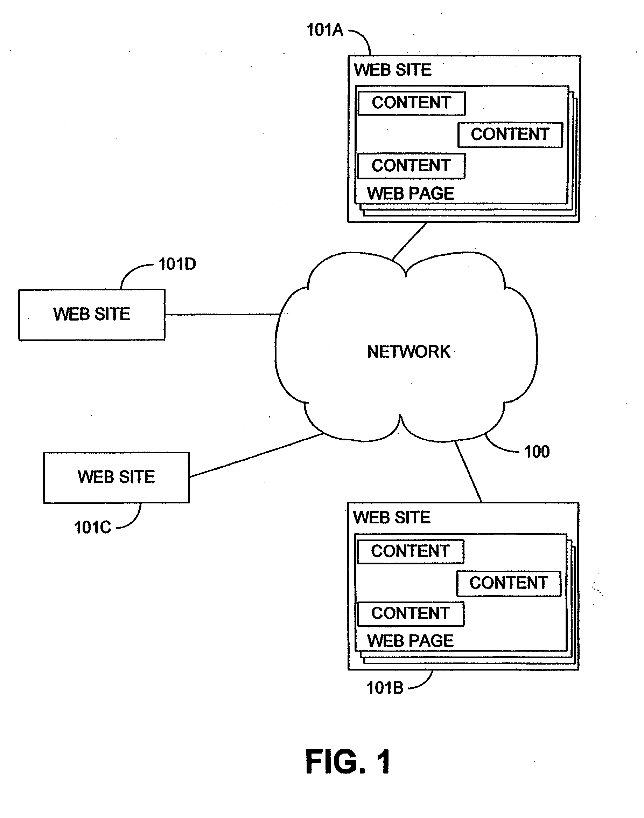

Referring now to FIG. 1, there is shown a computer network where embodiments of the present invention may be employed. In FIG. 1, one or more web sites 101 (i.e., 101A, 101B,...) are accessible via network 100. Other nodes and computers are not shown in FIG. 1 for clarity of illustration. In one embodiment, network 100 includes the Internet. However, network 100 may also include an intranet or other types of computer networks.

A web site 101 may be hosted in a computer or data processing device capable of communicating over a network. For example, a web site 101 may be hosted in a web server computer such as those available from the Hewlett-Packard Company. As shown in FIG. 1, a web site 101 may include one or more web pages, with each web page including various contents. Examples of web page contents include images, text, computer programs, downloadable files, audio, video, etc. The web pages may be structured such that they are on various levels. For example, a home page may be presented as a first level web page, with a hyperlink on the home page allowing access to a second level web page, and so on.

The contents of a web page may come from various sources. For example, a web page may include law-related information from a legal department, advertising from a marketing department, engineering data from design teams, images from graphics design vendors, etc. The contents may come from non-technical personnel without a programming background. Depending on the target audience, the contents may also be in various human languages (e.g., French, German,...).

As can be appreciated, an organization that wishes to maintain a consistent look and feel across its web sites faces the task of collecting, editing, and publishing contents that come from multiple, diverse sources. Although non-technical personnel may use graphical templates to enter content in a web page, the challenge of maintaining consistency among multiple web sites that each has multiple web pages remains.

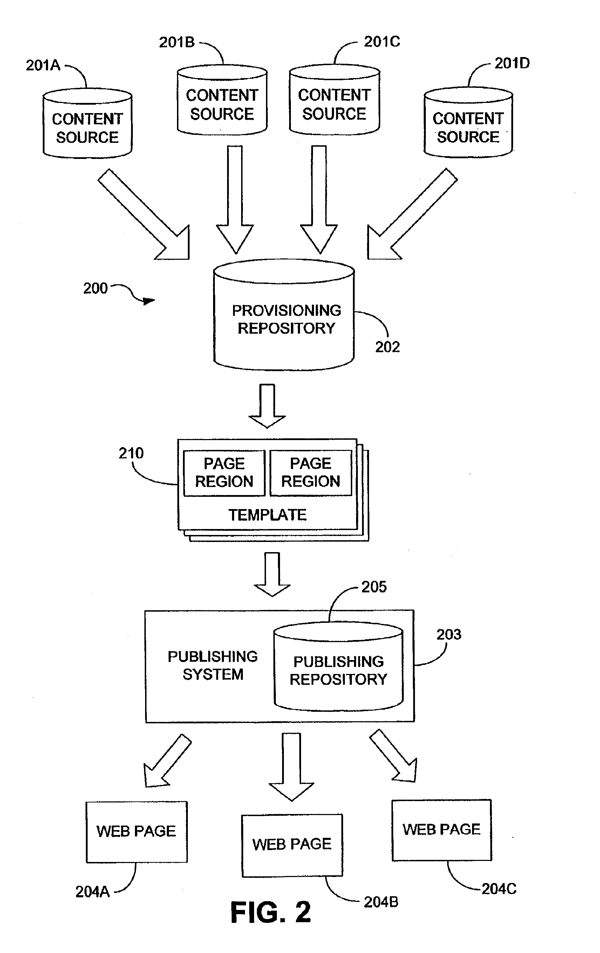

FIG. 2 shows a functional diagram illustrating a system 200 for creating and publishing web pages in accordance with an embodiment of the present invention. The components of system 200, and all the other components referred to in the present disclosure, may be implemented in hardware, software, or a combination of hardware and software (e.g., firmware). As shown in FIG. 2, a provisioning repository 202 receives contents from content sources 201 (i.e., 201A, 201B...). A content source 201 may be a local or remote file system, a remote repository, web site personnel entering content from a terminal, etc. For example, a content source 201 may be a database in a remote data center in communication with a computer that includes provisioning repository 202.

In one embodiment, provisioning repository 202 includes a database that serves as a central repository of contents from various sources. The database may be of the type available from the Oracle Corporation, for example. Contents may be stored and retrieved from provisioning repository 202 as data or objects. Contents uploaded to provisioning repository 202 from a file system may be stored as binary data or referenced with pointers to the file system.

As can be appreciated, provisioning repository 202 facilitates collection and retrieval of contents. Contents that may be shared among web pages may be stored in provisioning repository 202. By storing contents in provisioning repository 202 instead of simply entering them directly into a template or a web page, contents from different sources may be created once and used multiple times in different web pages. Provisioning repository 202 also facilitates control of content type and format so that the resulting web pages conform to a common standard, maintain a consistent look and feel, and uniformly display brands or trademarks, if any.

Still referring to FIG. 2, one or more templates 210 include page regions where content may be displayed. For each page region, content may be pulled from provisioning repository 202. In one embodiment, a content item in a page region is linked to a database table in provisioning repository 202. An instance (i.e., copy) of a pre-existing template may be created and then populated with desired content.

A template may be populated with content originally from any of content sources 201. For example, a page region for displaying a copyright notice on a web page may be filled with content from a legal department. A template 210 may be populated in the same computer hosting provisioning repository 202, in the same computer hosting publishing system 203, or in a separate computer.

Different templates 210 may be provided for different applications. For example, a template may be designed to display advertising. Instances of such an advertising template may be made to create web pages for different advertisements. The advertising template may also include a page region for displaying pricing information. The pricing page region may include content from a South American sales department if the advertising template will be used to create a web page to be published on a South American web site, from a Japanese sales department if the advertising template will be used to create a web page to be published on a Japanese web site, etc. Although the resulting web pages may have different information, they will all have the look and feel of the advertising template. As can be appreciated, providing ready-made templates facilitates creation of web pages that follow a common standard.

Still referring to FIG. 2, publishing system 203 publishes a web page 204 (i.e., 204A, 204B...) in a computer network such as the Internet. Publishing system 203 includes a publishing repository 205 for storing contents of web pages to be published. Such contents may be copied from provisioning repository 202 into publishing repository 205. This allows web pages to receive content from publishing repository 205. In one embodiment, publishing repository 205 includes a database.

Storing the contents of web pages in publishing repository 205 takes load off provisioning repository 202 and facilitates publication of web pages 204. Additionally, it allows available contents (i.e., those in provisioning repository 202) to be separated from contents to be published (i.e., those in publication repository 205) for better control of the publication process.

A web page 204 may be published by storing it in a web server computer, for example. A web page 204 may also be published by dynamically creating and delivering it to a node in a computer network upon request. Once published, computers coupled to the same network as the web server computer may then access the web page 204. For example, the web page 204 may be published by making it available from a web site accessible via the Internet.

As can be appreciated, system 200 allows the resulting web pages 204 to have the same look and feel, thus maintaining uniformity across multiple web sites.

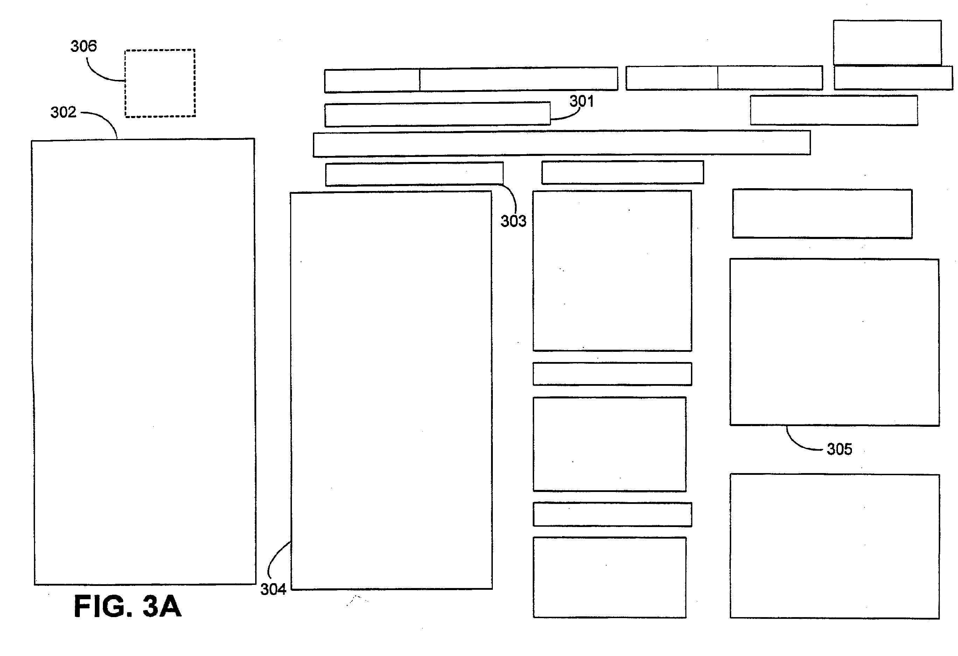

FIG. 3A shows an example template in accordance with an embodiment of the present invention. Template 210A shown in FIG. 3A is a specific embodiment of a template 210 shown in FIG. 2. Template 210A includes several page regions but only page regions 301-305 are specifically labeled in FIG. 3A for clarity. Page region 301 may be used for displaying the title of a web page. For example, page region 301 may display text with a standard font and size. Page region 302 may display navigation links. An example of content that may be displayed in page region 302 includes links to other web pages. Page region 303 may display a heading for content displayed in page region 304. Page region 305 may display an image.

A web page author may populate the page regions of a template with content available from provisioning repository 202. For example, a web page author may populate page regions 301-305 with content selectable from provisioning repository 202. Some page regions may also include predetermined contents that are not changeable by web page authors. Such page regions, hereinafter referred to as an "invariant page region", require a higher authorization level than what is normally given to a web page author. Invariant page regions are normally used for displaying content that does not change. Using template 210A as an example, page region 306 may be an invariant page region. That is, the content of page region 306 may be fixed upon creation of template 210A and is thus not changeable by a web page author. In one embodiment, page region 306 displays a trademark or a logo. Making page region 306 invariant ensures that the trademark or logo will be displayed consistently as required by applicable intellectual property laws, for example.

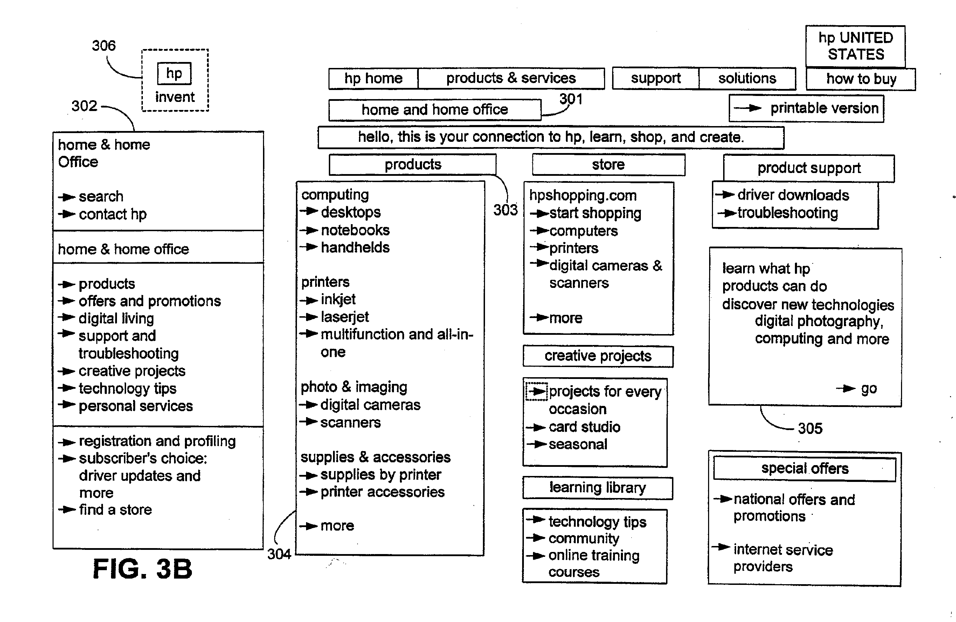

FIG. 3B shows an example web page created based on template 210A. In FIG. 3B, template 210A is superimposed on the web page for illustration purposes. As can be appreciated, instances of template 210A may be used to create other similar web pages. For example, page regions 301-305 may include content for a different geographical location.

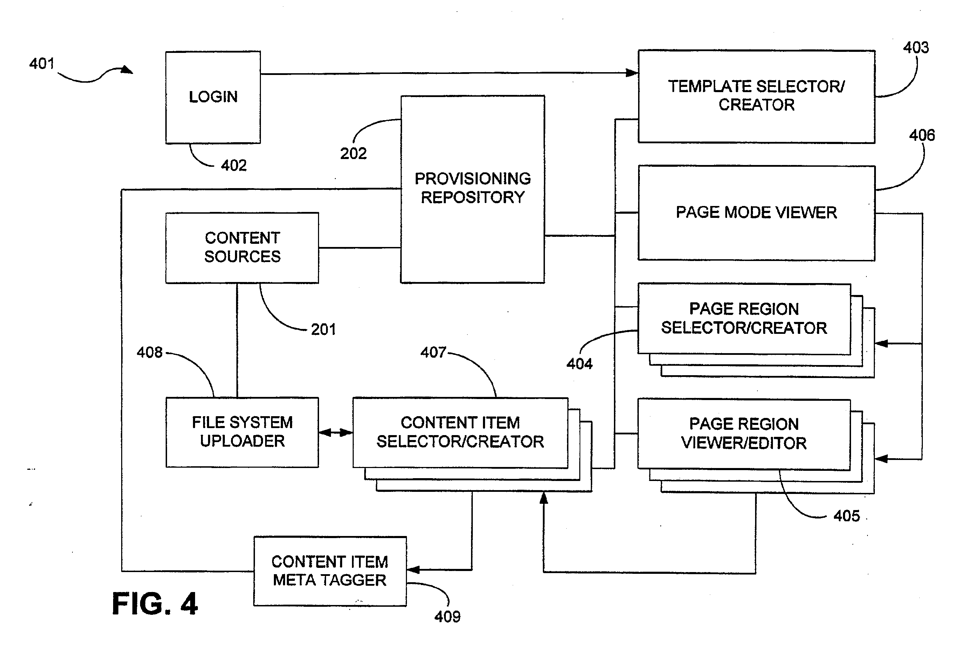

Referring to FIG. 4, there is shown a functional diagram of a system 401 for creating web pages in accordance with an embodiment of the present invention. In one embodiment, portions of system 401 are implemented using the Dynamo™ software, version 5.5, available from Art Technology Group (ATG), Inc. Other software may also be used without detracting from the merits of the present invention.

Users may access system 401 via login component 402. Login component 402 determines whether a user has the appropriate permissions herself or is belonging to a group that has the appropriate permissions. Depending on her authorization level, a user may edit, create, view, delete, approve, etc. a web page.

A template selector/creator 403 allows for the browsing and selection of pre-existing templates. For example, a template for a product web page may be made available from provisioning repository 202. A user who needs to create a product web page may thus select and create an instance of the template. Templates based on the product web page template may also be made available in different languages to accommodate different geographical locations. Template selector/creator 403 also allows for the creation of new templates, which may be based on a set of underlying templates (also referred to as page classes in object oriented terminology). To facilitate finding and storage of templates and associated page regions, templates and page regions are advantageously named using an agreed upon naming convention.

A web page may be created based on a selected template. Thereafter, the web page may be viewed using a page mode viewer 406. In one embodiment, page mode viewer 406 has an edit mode and a preview mode. Edit mode displays a web page for editing. In one embodiment, all editable page regions of a web page display edit indicators when in edit mode. Preview mode shows a web page the way it will be displayed to end-users (e.g., Internet users browsing a web site that includes the web page). Preview mode advantageously allows a newly created web page to be viewed before publishing it in a "live" web site.

Page region selector/creator 404 allows for the organization, selection, and creation of new page regions. In one embodiment, page region selector/creator 404 also allows for the creation of a new page region based on the type of page region as dictated by the template on which the web page is based. The different types of page regions may include navigation (e.g., page region 302 shown in FIG. 3B), banner, promotion (e.g., page region 305 shown in FIG. 3B), link, list of links (e.g., page region 304 shown in FIG. 3B), etc.

Page region viewer/editor 405 allows a particular page region to be populated with content. In one embodiment, this is accomplished by providing a form-based interface to the user. Depending on the type of content (e.g., text, link, title, image,...), different form elements allow entry, modification, selection, or browsing of a content item. For example, if a particular content item is suited for selection from a list of available or newly created content, then the user will be guided to browse for or select from a list by way of content item selector/creator 407. Page region viewer/editor 405 allows textual content to be entered directly into a page region.

As shown in FIG. 4, system 401 includes a provisioning repository 202 that receives contents from one or more content sources 201 (also, see FIG. 2). In the example of FIG. 4, a content source 201 may be a file system. A file system uploader 408 allows contents to be stored in a provisioning repository 202. File system uploader 408 also allows contents be stored in a content source 201 and referenced by provisioning repository 202.

File system uploader 408 may tag contents with categorical or navigational information during the uploading process. Alternatively or in additions a content item may be tagged by meta tagger 409.

A content item may be tagged with meta tags, which are descriptive elements having a name and a value. In an example meta tag "Colors Used: Red, Green, Cyan", "Colors Used" is the name while "Red", "Green", "Cyan" are values. Meta tags facilitate searching and provide keywords and descriptions on web pages that do not have text, for example.

In one embodiment, meta tagger 409 provides a user interface for asking a user to supply meta information for each content to be uploaded. Such a user interface may be invoked by file system uploader 408, or content item selector/creator 407.

Content item selector/creator 407 also allows for the selection of content from those available from provisioning repository 202. Content item selector/creator 407 may also make a call to file system uploader 408 to facilitate uploading of contents to provisioning repository 202.

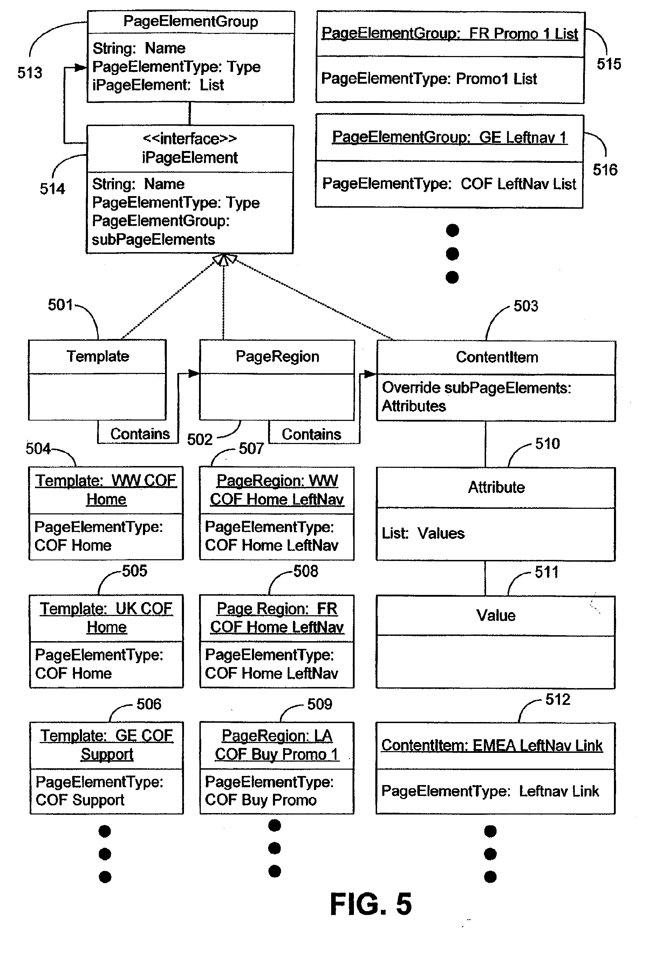

FIG. 5 shows an example object model of elements of a web page in accordance with an embodiment of the present invention. In the example of FIG. 5, a template (box 501) includes one or more page regions (box 502), which includes one or more content items (box 503). For each template, different instances may be made for different geographical locations, page types, etc. (e.g., see boxes 504, 505, and 506). Similarly, a page region may also have different instances (e.g., see boxes 507, 508, 509).

In the example of FIG. 5, a content item may have one or more attributes (box 510). Each attribute, in turn, may have one or more values (box 511). Generally speaking, an attribute is a holder of values. For example, a content item may have a "Seasonal" attribute having "Halloween", "Christmas", and "Back To School" as values. Box 512 shows an instance of a content item for a navigation page region.

In the example of FIG. 5, a template, page region, and content item object classes implement the iPageElement object interface (box 514) to: (a) gain the polymorphic ability to be arbitrarily grouped as needed in a page element group (box 513) list; (b) allow a template, page region, and content item to have a Name and Business Type; and (c) optionally contain other lists of classes or subclasses of the same or subtypes in the "template to page region to content item" (box 501 to box 502 to box 503) object hierarchy. Boxes 515 and 516 show examples of page element groups representing lists of different types of page regions. Box 516, for example, could be a list of navigation type page regions (e.g., page region 302 shown in FIG. 3B).

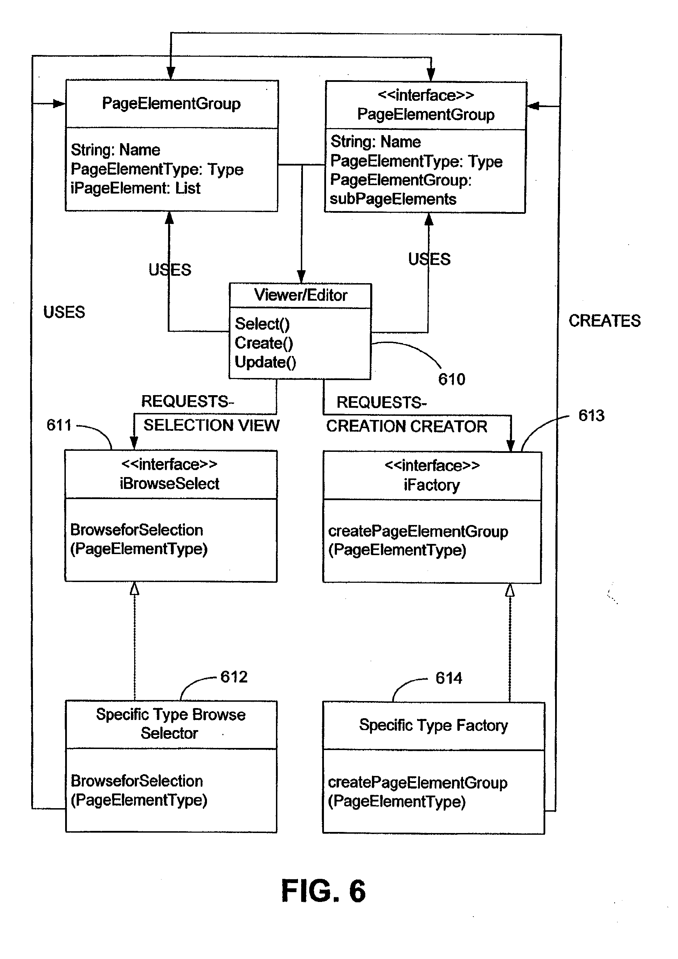

Referring now to FIG. 6, there is shown an example object model for processing elements of a web page in accordance with an embodiment of the present invention. In the example of FIG. 6, a page element (e.g., a template, page region, or content item) or a group of page elements may be selected, created, or updated (box 610). Available page elements or groups of page elements may be browsed for selection (box 611); the browsing and selection may be tailored to the type of page elements involved (box 612). Similarly, a new page element or group of page elements may be created (box 613); the creation process may be tailored to the type of page elements involved (box 614).

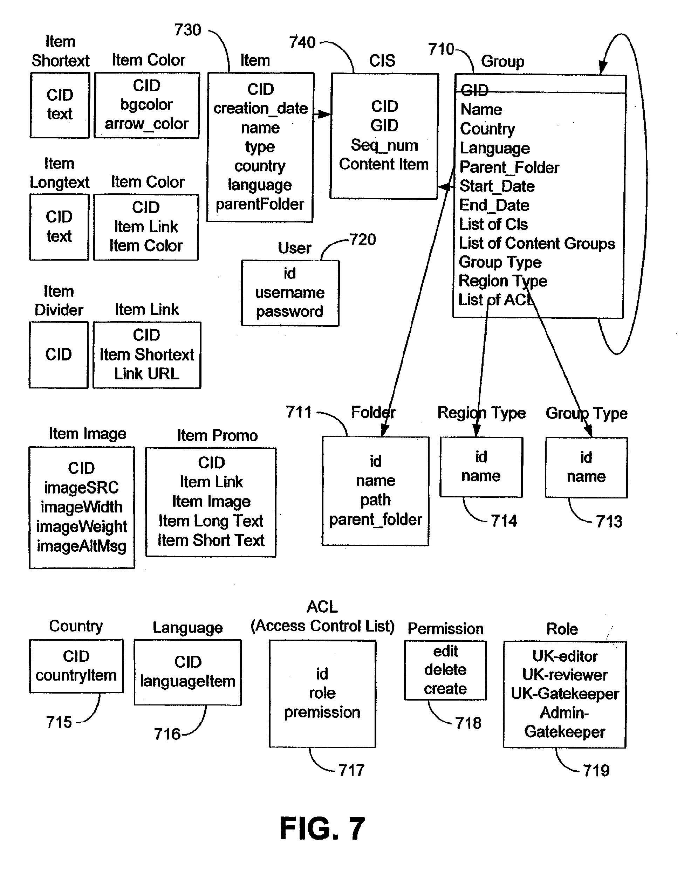

FIG. 7 shows an example data model of a provisioning repository in accordance with an embodiment of the present invention. In the example of FIG. 7, data in a provisioning repository may belong to a group with a designated group ID and group name (box 710). A group may be stored in a folder (box 711) on a mass storage device, for example. A group may be of a particular type (box 713). The type of a group may be the same as that of the page regions it contains. Thus, the different types of groups may include navigation, banner, promotion, link, list of links, etc. Still referring to FIG. 7, content items belonging to a group may be suitable for use in a particular type of page region (box 714), country (box 715), and language (box 716).

In the example of FIG. 7, users authorized to access the provisioning repository have a user ID, user name, and password (box 720). A user may process a content item depending on her permission and role (box 717). A user may be permitted to edit, delete, and/or create content items (box 718). Each user is assigned a particular role with respect to a content item. For example, a user may be an editor, reviewer, or gatekeeper (i.e., someone who provides the final approval) of content items for a particular country (box 719). A user may also be an administrator, which means the user may access a content item regardless of its country designation.

Still referring to the example of FIG. 7, a group (box 710) may be comprised of one or more content items (box 730); a content item (box 730) may belong to a group. Box 740 is a mapping between content items and their groups, and vice versa. As indicated in box 730, a content item may be of a certain type. Available content types may include color, short text, long text, image, link, etc.

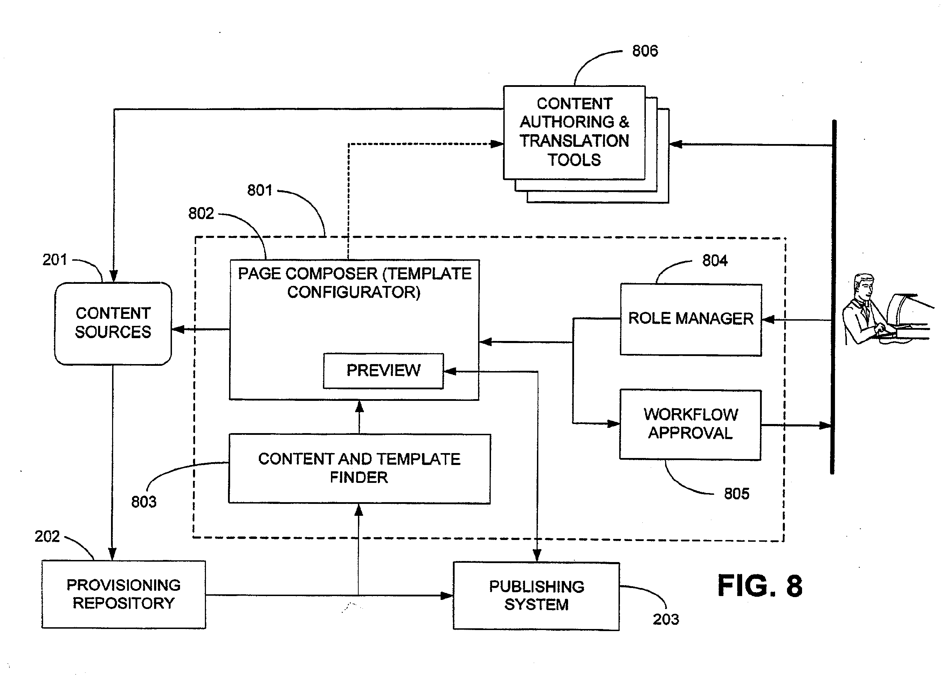

In another aspect of the present invention, the creation, editing, and publication of web pages are managed using a workflow system. Referring to FIG. 8, there is shown a functional diagram of an editorial workflow system 801 in accordance with an embodiment of the present invention. Editorial workflow system 801 includes a page composer 802 for creating and editing a web page, and a content and template finder 803 for populating page regions with content. As can be appreciated, page composer 802 and content and template finder 803 may employ components similar to that of system 401 (see FIG. 4). Page composer 802 may receive contents from provisioning repository 202, which in turn receives contents from content sources 201. Content sources 201 may include contents provided by users utilizing a content authoring and translation tools 806.

Editorial workflow system 801 also includes a role manager 804 for assigning roles to various users. For example, a user may be designated as an editor with permission to edit web pages, an editor/creator with permission to create and edit web pages, a system administrator with access to all parts of the system, or a reviewer with permission to review and approve publication of web pages. Role manager 804 thus constrains usage of page composer 802. That is, an editor will not be able to use page composer 802 to instantiate (or create) a web page, an editor/creator will not be able to approve publication of a web page, and so on.

Workflow approval 805 allows for the configuration and control of the approval process. Once a web page is created, that web page may then be sent to workflow approval 805. Workflow approval 805 then coordinates the review of the web page by alerting designated reviewers. In one embodiment, workflow approval 805 sends e-mail notification to reviewers. Reviewers may enter their decision and comments into workflow approval 805, which in turn notifies the relevant users including the person who sent the web page for approval. Workflow approval 805 may be configured for a specific workflow process. For example, the workflow process may include several phases including creation of a web page, editing of the web page, first-level review by web site personnel, followed by upper-management review, and then authorization from the legal department.

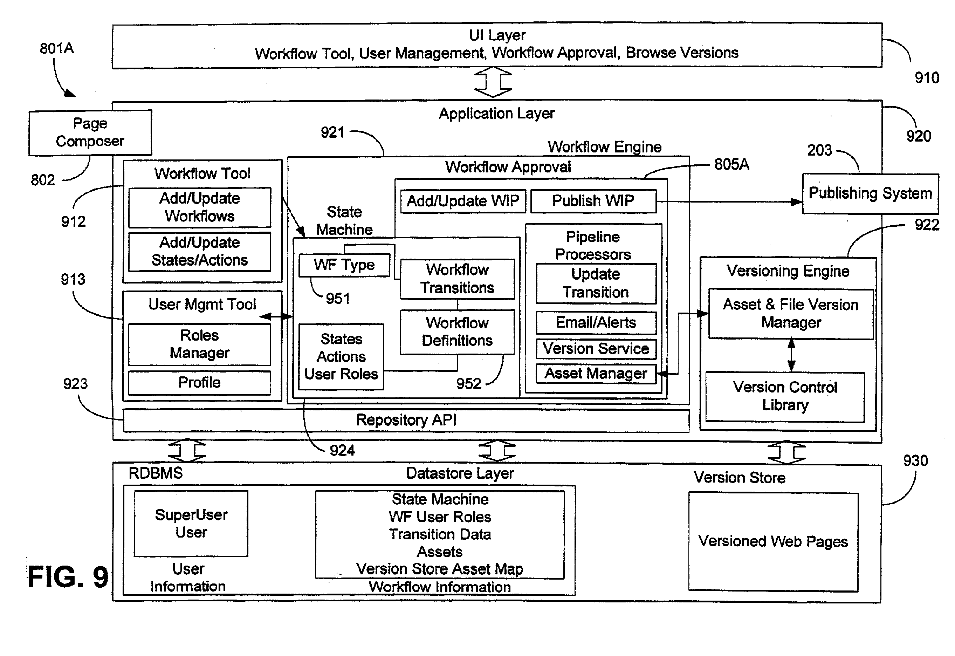

FIG. 9 shows a functional diagram of an editorial workflow system 801A in accordance with an embodiment of the present invention. Editorial workflow system 801A is a specific embodiment of editorial workflow system 801 shown in FIG. 8. Editorial workflow system 801A includes a UI (user interface) layer 910, an application layer 920, and a data store layer 930. In one embodiment, editorial workflow system 801A is implemented using the Dynamo™ software version 5.5 (available from Art Technology Group (ATG), Inc.), Java, JSP, and Java Beans.

UI layer 910 allows a user to interact with components of application layer 920 such as workflow tool 912, user management tool 913, and workflow approval 805A. UI layer 910 also allows a user to browse versions of a web page stored in data store layer 930.

In the example of FIG. 9, application layer 920 includes a workflow tool 912, a user management tool 913, a workflow engine 921, a versioning engine 922, and a repository API (application programming interface) 923. Workflow tool 912 allows for the configuration of workflow processes. Workflow tool 912 also allows for the addition and update of workflows processes. As mentioned, one workflow process may include several consecutive phases, while another workflow process may include several concurrent phases. A workflow process may be created and edited to meet specific applications.

Workflow tool 912 also allows for the addition and update of states and actions. Each workflow process may have several predefined states. For example, a workflow process may place a web page in a creation state while the web page is being created, in editing state while it is being edited, in review state while it is being reviewed, or in approved state once it is approved for publication. Each state has associated actions that can be performed to move to the next state. For example a web page in review state may require approval (the action) from all designated reviewers before being placed in approved state.

User management tool 913 allows for the management of user information. User management tool 913 may be used to assign roles and to keep track of user profiles (e.g., full name, role, permissions, department...).

In the example of FIG. 9, workflow engine 921 includes a state machine 924 and workflow approval 805A. State machine 924 keeps track of state transitions for each web page (also referred to as an "asset") going through the workflow process. For example, if a workflow process includes creation, editing, review, and approval steps, state machine 924 places a web page in creation state while it is being created, in editing state while it is being edited, etc. State machine 924 may require completion of all actions assigned to a particular state prior to placing the web page in the next state.

In the example of FIG. 9, state machine 924 operates based on arbitrary workflow types (box 951) defined using workflow tool 912. The workflow types may be based on country, application, etc. For example, a specific workflow may be defined for publishing a web page in Germany on a rush basis (i.e., a German emergency publish workflow). Each workflow type has an associated workflow definition (box 952), which includes everything that makes up a workflow including the workflow's name, the workflow's states, the possible actions to transition between states, the roles that are allowed to take a particular action, and the users assigned to those roles.

Workflow approval 805A receives web pages (referenced by their asset ID's) to be approved from page composer 802. Workflow approval 805A is a specific embodiment of workflow approval 805 shown in FIG. 8. In the example of FIG. 9, workflow approval 805A allows a web page to be added to the work in progress (WIP). Web pages that have cycled through the workflow process (as determined by state machine 924) are provided to publishing system 203 for publication. Workflow approval 805A may also include components for updating users about transitions, providing e-mail notification and alerts, assigning versions to web pages, and managing the storage and retrieval of versioned web pages.

Still referring to the example of FIG. 9, a versioning engine 922 assigns a version for each approved web page. Versions of a web page may be stored in data store layer 930. This advantageously allows a web page to be rolled back to an earlier version in case a later version is found to be unsuitable for publication. Versioning engine 922 may include an asset and file version manager for storing and retrieving versioned web pages.

Application layer 920 communicates with data store layer 930 by way of repository API 923. In the example of FIG. 9, data store layer 930 stores user information, workflow information, and versioned web pages.

Improved techniques for providing information in a computer network have been disclosed. While specific embodiments have been provided, it is to be understood that these embodiments are for illustration purposes and not limiting. Many additional embodiments will be apparent to persons of ordinary skill in the art reading this disclosure. Thus, the present invention is limited only by the following claims.

## Claims

1. A system (200) for providing information in a computer network, the system comprising:
a first content source (201A) and a second content source (201B);
a first repository (202) containing contents from the first content source and the second content source;
a first template (210) having a page region for displaying content selected from the first repository; and
a publishing system (203) for publishing a document (204) based on the first template.

2. The system of claim 1 wherein the document receives content from a second repository of the publishing system.

3. The system of claim 1 wherein the first content source includes a file system.

4. The system of claim 1 further comprising a second template having a page region for displaying content selected from the first repository.

5. The system of claim 1 wherein the document includes a web page.

6. The system of claim 1 wherein the computer network includes the Internet.

7. A method of providing information in a computer network, the method comprising:
storing a first content from a first source and a second content from a second source in a first repository;
populating a region of a first template with the first content and another region of the first template with the second content; and
publishing a document based on the first template.
